# EUROPÄISCHE PATENTSCHRIFT

(11) **EP 3 260 885 B1**
(45) Veröffentlichungstag und Bekanntmachung des Hinweises auf die Patenterteilung: **21.11.2018**
(21) Anmeldenummer: 17176580.3
(22) Anmeldetag: 19.06.2017
(51) Int. Cl.: G01S 17/42, G01S 7/481, G01C 15/00, G02B 26/08, G02B 26/10, G02B 27/48

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(30) Priorität: 24.06.2016 DE 102016111615
(43) Veröffentlichungstag der Anmeldung: 27.12.2017
(73) Patentinhaber: Sick AG, 79183 Waldkirch (DE)
(72) Erfinder: Engler, Herr Dr. Michael, 79350 Sexau (DE); Krämer, Joachim, 79189 Bad Krozingen (DE); Albert, Dr. Magnus, 79104 Freiburg (DE); Sigmund, Herr Jörg, 79341 Kenzingen (DE); Baldischweiler, Boris, 79194 Gundelfingen (DE)

(56) Entgegenhaltungen:
- EP-A1- 0 869 384
- EP-A1- 2 469 296
- EP-A1- 2 808 653
- DE-A1-102007 003 852
- US-B2- 8 842 262

## Beschreibung

Die Erfindung betrifft einen optoelektronischen Sensor, insbesondere einen Laserscanner, und ein Verfahren zur Erfassung von Objekten nach dem Oberbegriff von Anspruch 1 beziehungsweise 11.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Laserscanner werden nicht nur für allgemeine Messaufgaben, sondern auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

Sicherheitslaserscanner müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe.

In der DE 20 2013 102 440 U1 erfolgt eine Frontscheibenüberwachung eines Laserscanners durch einen separaten Sender und Empfänger, mit deren Hilfe Überwachungsstrahlung auf die Frontscheibe geworfen und nach Reflexion wieder empfangen wird. Die EP 2 237 065 A1 verwendet eine Testeinrichtung, die auf einem Rotor angeordnet ist sowie ein außerhalb der Frontscheibe angebrachtes Reflektorelement. Die EP 1 813 961 B1 schlägt für eine Kamera vor, den Reflex an der Innenseite einer Frontscheibe mit einem Bildsensor aufzunehmen und zur Verschmutzungserkennung auszuwerten.

Um über den gesamten Erfassungsbereich zuverlässige Daten zu erhalten, bestehen hohe Anforderungen nicht nur für die eigentliche Messung der Abstände zu erfassten Objekten, sondern auch für die Genauigkeit der Winkelmessung. Herkömmlich wird dazu eine Encoderscheibe mit regelmäßigen Öffnungen eingesetzt. Eine Gabellichtschranke strahlt durch die Öffnungen der drehenden Encoderscheibe, und durch Bestimmung der Anzahl von Strahlunterbrechungen pro Zeit wird eine Drehgeschwindigkeit beziehungsweise Winkelposition berechnet. Dafür werden verhältnismäßig viele Bauteile einschließlich einer relativ anspruchsvollen Mechanik für die Codescheibe und der Gabellichtschranke verwendet. Einzelne Öffnungen der Codescheibe können im Betrieb durch Fremdpartikel oder Staub verstopfen, was zu Wartungsbedarf oder sogar Fehlmessungen bis hin zu Ausfällen führt. Die Gabellichtschranke ist anfällig gegenüber Fremdlicht.

Die DE 10 2006 041 307 A1 offenbart eine beispielsweise als Reflexionstaster ausgebildete optoelektronische Sensoranordnung mit einem Bildsensor, der aufeinanderfolgende Bilder auswertet, um eine Relativbewegung eines erfassten Objekts zu detektieren. Das steht aber in keinem Bezug zu einem Laserscanner oder dessen Scanbewegung.

Die EP 2 626 671 A1 befasst sich mit einer Positionsbestimmung mit einer sich relativ zu einer Oberfläche bewegenden Abtasteinheit mit einem Bildsensor. Eine Recheneinheit bestimmt aus einem Unterschied zwischen zeitlich nacheinander erfassten Lichtintensitätsmustern einen Verfahrweg beziehungsweise eine Verfahrgeschwindigkeit. Das dient beispielsweise der Bestimmung von Positionen eines Fahrzeugs auf einer Transportstrecke.

Die US 8 842 262 B2 offenbart eine Scanvorrichtung, deren bewegliches Scanelement für eine Polarisationstrennung ausgebildet ist. Für den Scanmechanismus wird unter anderem ein Galvanometer vorgeschlagen.

In der DE 10 2007 003 852 A1 wird ein galvanometrischer Motor mit optischer Positionsdetektionseinrichtung beschrieben, der beispielsweise in Laserscansystemen verwendbar ist. Die Winkelstellung wird optisch erfasst, indem ein Lichtstrahl auf einen Spiegel am Rotor gerichtet und der reflektierte Lichtfleck auf einem optischen Positionssensor detektiert wird. Der Positionssensor kann als CCD- oder CMOS-Matrix ausgebildet sein.

Es ist deshalb Aufgabe der Erfindung, in einem gattungsgemäßen Sensor für eine zuverlässige Bestimmung der Winkelposition zu sorgen.

Diese Aufgabe wird durch einen optoelektronischen Sensor und ein Verfahren zur Erfassung von Objekten nach Anspruch 1 beziehungsweise 11 gelöst. Der Sensor weist eine drehbare Ablenkeinheit auf, also beispielsweise einen rotierenden Drehspiegel oder einen rotierenden Optikkopf mit Lichtsender und Empfänger, und tastet auf diese Weise mit einem Lichtstrahl periodisch eine Überwachungsebene ab. Bei zusätzlicher Verkippung der Ablenkeinheit wird der Überwachungsbereich zu einem dreidimensionalen Raumbereich erweitert. Ein aus dem zurückkehrenden Lichtstrahl erzeugtes Empfangssignal wird ausgewertet, um zu erkennen, ob ein Objekt angetastet wurde. Dabei ist der Sensor insbesondere als Entfernungsmesser ausgebildet, indem die Lichtlaufzeit zwischen Aussenden und Empfang des Lichtstrahls und daraus die Entfernung zu dem Objekt bestimmt wird. Eine Winkelmesseinheit bestimmt die jeweilige Winkelposition der Erfassung.

Die Erfindung geht nun von dem Grundgedanken aus, in der Winkelmesseinheit die herkömmliche Encoderscheibe samt Gabellichtschranke zu ersetzen. Dazu ist ein mit der Ablenkeinheit mitbewegter Bildsensor vorgesehen, der auf einen ruhenden Teil des Sensors wie beispielsweise ein Gehäuse oder eine Frontscheibe ausgerichtet ist. Aus Perspektive des Bildsensors befindet sich das ruhende Teil in Bewegung. Alternativ ruht der Bildsensor, vollzieht also die Drehbewegung nicht mit, und ist auf die Ablenkeinheit gerichtet. Auch dadurch ergibt sich eine Relativbewegung. Mittels Auswertung des Signals des Bildsensors von verschiedenen Zeitpunkten und damit Drehstellungen, insbesondere einer Bildsequenz, wird die Relativbewegung in einer Recheneinheit bewertet und damit die Winkelposition beispielsweise über die Drehgeschwindigkeit bestimmt. Die Recheneinheit kann Teil der Winkelmesseinheit, ebenso aber auch partiell oder insgesamt Teil der Auswertungseinheit sein, welche das Empfangssignal des Lichtstrahls auswertet, der den Überwachungsbereich abtastet.

Die Erfindung hat den Vorteil, dass die Winkelmesseinheit robuster, zuverlässiger und kostengünstiger wird. Außerdem ist es möglich, eine derartige Winkelmesseinheit extrem kompakt zu realisieren und damit die Baugröße des Sensors zu reduzieren. Außerdem kann das Signal des Bildsensors sogar noch für zusätzliche Messungen genutzt werde, welche die Möglichkeiten und die Robustheit des gesamten Sensors deutlich erhöhen, etwa durch Fremdlichtmessung, Messung einer Frontscheibenverschmutzung, Helligkeitsmessung, zusätzliche Signaturen der Winkel oder dergleichen.

Die Recheneinheit bestimmt die Relativbewegung mit einem Verfahren des optischen Flusses. Dies ist ein etabliertes und robustes Verfahren, um Relativbewegungen optisch zu bestimmen. Vereinfacht ausgedrückt werden Bildmerkmale in einem Bild identifiziert, in einem anderen Bild Korrespondenzen der Bildmerkmale gesucht, und aus dem entstehenden Vektorfeld der Verschiebungen der Bildmerkmale und dem Zeitintervall zwischen den Aufnahmen der Bilder eine Bewegungsgeschwindigkeit einschließlich einer Richtung bestimmt. Der optische Fluss ist ein mächtiges Konstrukt, dessen Bestimmung und Auswertung in dieser Anwendung erheblich durch das Vorwissen erleichtert ist, dass sich sämtliche Bildmerkmale aufgrund der Rahmenbedingungen nur gemeinsam bewegen können.

Die Winkelmesseinheit weist bevorzugt eine Beleuchtungseinheit auf. Dies stellt genügend Amplitude und Struktur des Signals des Bildsensors sicher. Die Beleuchtung ist insbesondere eine Laserbeleuchtung, deren Laserspeckles eine auswertbare Struktur und damit auch Bildmerkmale für die Bestimmung des optischen Flusses bilden.

Die Winkelmesseinheit weist ein integriertes System auf, welches zumindest den Bildsensor und die Recheneinheit umfasst. Nochmals bevorzugt ist auch eine Beleuchtungseinheit mit integriert. Derartige integrierte Systeme oder Chips finden beispielsweise Anwendung in Computermäusen. Deshalb sind sie sehr ausgereift, damit robust und zu geringen Kosten erhältlich. Durch die Verwendung eines integrierten Systems sind weniger spezifische Leiterplattenflächen oder sonstige Elemente in dem Sensor notwendig. Die Auswertung in der Recheneinheit erzeugt in einem nicht speziell für den Sensor entwickelten Chip noch keine Winkelposition, sondern beispielsweise nur ein Geschwindigkeitssignal. Die weitere Verrechnung aus der internen Sensorgeometrie zu einer Winkelposition unter Berücksichtigung der internen Sensorgeometrie könnte zwar auch in der Recheneinheit der Winkelmesseinheit erfolgen, fällt aber eher der Auswertungseinheit des Sensors zu. Zumindest einige kommerzielle Chips für Computermäuse bieten auch die Möglichkeit, die Bilddaten selbst auszulesen. Damit kann Funktionalität der Recheneinheit in die Auswertungseinheit verlagert werden, und außerdem können von der Winkelmessung unabhängige Auswertungen der Bilddaten erfolgen.

An dem ruhenden Teil oder an der Ablenkeinheit ist bevorzugt mindestens eine Referenzmarkierung in einer bekannten Winkelposition angebracht. Das ist beispielsweise eine besonders helle Markierung, ein Reflektor oder ein sonstiges leicht identifizierbares Merkmal. Dadurch wird insbesondere eine Nullstellung festgelegt oder ein durch nicht ganz exakte Bestimmung der jeweiligen Relativbewegung auftretender Schlupf periodisch korrigiert, ehe daraus eine relevante Ungenauigkeit entstehen kann. Es können auch mehrere Referenzmarkierungen in mehreren Winkelstellungen bis hin zu einem umlaufenden Ring mit regelmäßigen Referenzmarkierungen angebracht sein.

Die Ablenkeinheit weist bevorzugt einen Drehspiegel auf, und der Bildsensor ist an der Rückseite des Drehspiegels angeordnet. Dort kann der Bildsensor oder ein integrierter Chip mit Bildsensor und Recheneinheit leicht untergebracht werden, und wegen des dazwischen angeordneten Drehspiegels gibt es keine Probleme mit Streulicht, das von der Winkelmesseinheit in den eigentlichen Messkanal des Abtaststrahls gelangt oder umgekehrt.

Alternativ ist die Ablenkeinheit als rotierende Abtasteinheit ausgebildet, welche den Lichtsender und den Lichtempfänger aufweist, wobei der Bildsensor auf der Abtasteinheit mit einem Winkelversatz zu Lichtsender und Lichtempfänger angeordnet ist. Hier ist anstelle eines Drehspiegels ein Messkopf samt Lichtsender und Lichtempfänger des Abtaststrahls vorgesehen, der insgesamt gegenüber einer Sockeleinheit mit Gehäuse, Frontscheibe und Motor sowie möglicherweise weiteren Komponenten rotiert. Durch einen Winkelversatz zwischen Bildsensor einerseits und Lichtsender und Lichtempfänger andererseits steht auch hier genug Platz zur Verfügung, und gegenseitige Störungen durch Streulicht werden verhindert. Das gilt vor allem bei einem ausreichend großen Winkelversatz vorzugsweise in der Nähe von 180°.

Der Sensor weist bevorzugt eine Frontscheibe auf, wobei der Bildsensor auf die Frontscheibe ausgerichtet ist und die Recheneinheit dafür ausgebildet ist, aus dem Signal des Bildsensors eine Verschmutzung der Frontscheibe zu erkennen. Der Bildsensor erfasst hier zumindest einen Teil der Frontscheibe, durch den auch der Abtaststrahl hindurchtritt. Zusätzlich kann auch ein anderer ruhender Teil erfasst sein, etwa ein Gehäuseabschnitt. Das Signal des Bildsensors wird hier für eine zweite Funktion zusätzlich zur Bestimmung der Winkelposition verwendet. Durch eine Verschmutzung der Frontscheibe ändert sich das Streuverhalten und damit Kontrast und Signalstärke in den Bilddaten des Bildsensors. Daran wird die Verschmutzung erkannt, sei es binär nach einer Schwellwertbetrachtung oder graduell in einem quantitativen Verschmutzungsmaß. Die Verschmutzungsinformation steht dabei falls gewünscht sogar mit einer sehr hohen Winkelauflösung zur Verfügung. Es sei daran erinnert, dass die Auswertung zwar in der Recheneinheit erfolgt, die Recheneinheit selbst aber partiell oder insgesamt Teil der Auswertungseinheit sein kann. Die Verschmutzungsprüfung kann also schon in der Winkelmesseinheit oder in der eigentlichen Sensorauswertung erfolgen.

In der Recheneinheit ist bevorzugt ein Referenzsignal für eine nicht verschmutzte Frontscheibe abgelegt. Die Verschmutzungsmessung wird also an einer zumindest funktionell ausreichend sauberen Frontscheibe kalibriert, und im späteren Betrieb werden Abweichungen erkannt.

Der Sensor ist bevorzugt als Sicherheitssensor, insbesondere Sicherheitslaserscanner ausgebildet und weist einen Sicherheitsausgang auf, wobei die Auswertungseinheit dafür ausgebildet ist zu bestimmen, ob sich ein Objekt in einem Schutzfeld innerhalb des Überwachungsbereichs befindet, und daraufhin ein sicherheitsgerichtetes Abschaltsignal über den Sicherheitsausgang auszugeben. Ein Sicherheitssensor ist ein sicherer Sensor im Sinne einer Sicherheitsnorm wie einleitend beschrieben und kann deshalb insbesondere zum Personenschutz an Gefahrenquellen eingesetzt werden. Eine Verschmutzungsmessung trägt zur Einhaltung dieser Normen bei. Allerdings bedeutet das keineswegs, dass nicht auch ein nicht in diesem Sinne sicherer Sensor von der Verschmutzungsmessung profitieren könnte.

Die Auswertungseinheit ist bevorzugt dafür ausgebildet, ein sicherheitsgerichtetes Abschaltsignal auszugeben, wenn eine Verschmutzung der Frontscheibe ein Schutzfeld betrifft. Allgemeiner ist eine Verschmutzung nur dann kritisch, wenn sie erstens keine zuverlässige Erfassung mehr erlaubt und zweitens einen Sichtbereich betrifft, der für die Anwendung auch relevant ist. In sicherheitstechnischer Anwendung wird dies durch die Schutzfelder festgelegt, denn die Erfassung von Objekten außerhalb von Schutzfeldern ist nicht sicherheitsrelevant. Eine Wartungsanforderung kann aber unabhängig davon sinnvoll sein, ob der Betrieb noch fortgesetzt wird.

Die Recheneinheit ist bevorzugt dafür ausgebildet, eine Relativbewegung der Ablenkeinheit gegenüber dem ruhenden Teil auch in einer Richtung senkrecht zu der Drehbewegung der Ablenkeinheit zu erfassen. Dies kann beispielsweise in einem Sensor mit erweitertem Überwachungsbereich nützlich sein, der seine Überwachungsebene verkippt und dadurch einen dreidimensionalen Raumbereich abtastet. Aber auch in einem Sensor mit fester Überwachungsebene kann es zu vertikalen Bewegungen durch Unwucht oder mechanische Schläge kommen, so dass eine Diagnose zur Überwachung des Laufverhaltens ermöglicht wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung durch eine Ausführungsform eines Laserscanners mit einer auf einem mitbewegten Bildsensor beruhenden Winkelpositionsbestimmung;
- Fig. 2: eine Schnittdarstellung durch eine weitere Ausführungsform eines Laserscanners ähnlich Figur 1, jedoch mit ruhendem Bildsensor;
- Fig. 3: eine Schnittdarstellung durch eine weitere Ausführungsform eines Laserscanners mit einer Variation der Anordnung und Ausrichtung des Bildsensors;
- Fig. 4: eine Schnittdarstellung durch eine weitere Ausführungsform eines Laserscanners mit auf einem mitbewegten Bildsensor beruhender Winkelpositionsbestimmung, der anstelle eines Drehspiegels einen rotierenden Messkopf aufweist; und
- Fig. 5: eine Schnittdarstellung durch eine weitere Ausführungsform eines Laserscanners ähnlich Figur 4, jedoch mit Bildsensor im ruhenden Teil des Laserscanners.

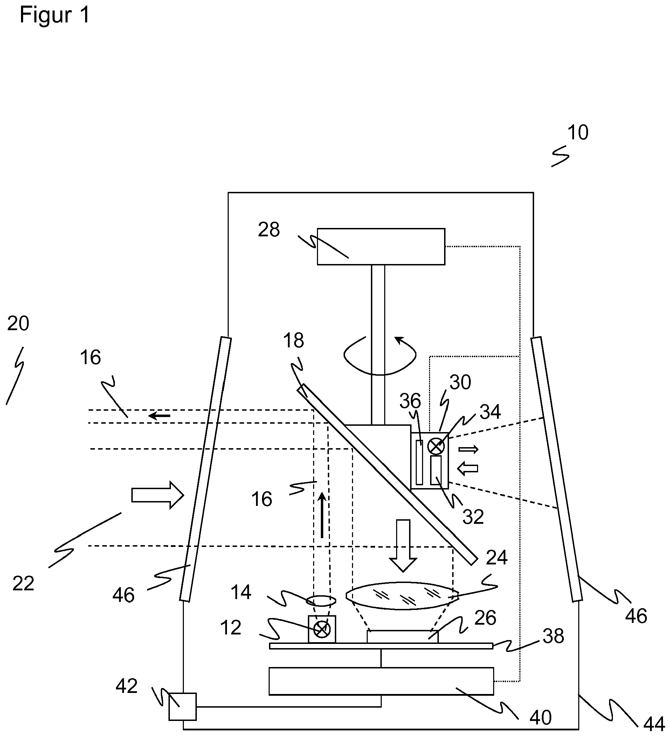

Fig. 1 zeigt eine schematische Schnittdarstellung durch einen Laserscanner 10. Ein Lichtsender 12, beispielsweise mit einer Laserlichtquelle im infraroten oder einem anderen Spektrum, erzeugt mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Laserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode).

Die Ablenkeinheit 18 ist in dieser Ausführungsform als Drehspiegel ausgestaltet und rotiert durch Antrieb eines Motors 28 kontinuierlich. Die jeweilige Winkelstellung des Motors 28 beziehungsweise der Ablenkeinheit 18 wird über eine Winkelmesseinheit 30 erfasst, die einen Bildsensor 32, eine Beleuchtungseinheit 34 und eine Recheneinheit 36 aufweist und weiter unten detailliert beschrieben wird.

Der von dem Lichtsender 12 erzeugte Sendelichtstrahl 16 überstreicht somit den durch die Rotationsbewegung erzeugten Überwachungsbereich 20. Die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Laserscanner auch in einer Autokollimationsanordnung bekannt. In der dargestellten Ausführungsform sind Lichtsender 12 und Lichtempfänger 26 auf einer gemeinsamen Leiterkarte 38 untergebracht. Auch das ist nur ein Beispiel, denn es können eigene Leiterkarten sowie andere Anordnungen beispielsweise mit einem gegenseitigen Höhenversatz vorgesehen sein.

Wird nun von dem Lichtempfänger 26 remittiertes Licht 22 aus dem Überwachungsbereich 20 empfangen, so kann aus der von der Winkelmesseinheit 30 gemessenen Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Laserscanner 10 geschlossen.

Diese Auswertung erfolgt in einer Auswertungseinheit 40, die dafür mit dem Lichtsender 12, dem Lichtempfänger 26, dem Motor 28 und der Winkelmesseinheit 30 verbunden ist. Somit stehen über den Winkel und die Entfernung zweidimensionale Polarkoordinaten aller Objekte in dem Überwachungsbereich 20 zur Verfügung. In sicherheitstechnischer Anwendung prüft die Auswertungseinheit 40, ob ein unzulässiges Objekt in einen innerhalb des Überwachungsbereichs 20 festgelegten Schutzbereich eingreift. Ist das der Fall, wird über einen Sicherheitsausgang 42 (OSSD, Output Signal Switching Device) ein Absicherungssignal an eine überwachte Gefahrenquelle, beispielsweise eine Maschine ausgegeben. Der Laserscanner 10 ist in derartigen sicherheitstechnischen Anwendungen durch Maßnahmen entsprechend der einleitend genannten Normen ein sicherer Laserscanner. In anderen Ausführungsformen ist anstelle des Sicherheitsausgangs 42 oder zusätzlich dazu eine Schnittstelle zur Ausgabe von Messdaten oder beispielsweise zum Parametrieren des Laserscanners 10 vorgesehen.

Alle genannten Funktionskomponenten sind in einem Gehäuse 44 angeordnet, das im Bereich des Lichtaus- und Lichteintritts eine Frontscheibe 46 aufweist.

Die Winkelmesseinheit 30 ist in Figur 1 nur sehr schematisch dargestellt. Vorzugsweise handelt es sich dabei um einen vollständig integrierten Chip, der sonst beispielsweise in Computermäusen Verwendung findet. Nicht dargestellt sind möglicherweise erforderliche Optiken, wobei je nach Aufbau des Laserscanners 10 eigene Optiken der Winkelmesseinheit 30 vorgesehen sein können oder Bereiche der schon vorhandenen Optiken etwa in Form besonderer Strahlformungszonen mitgenutzt werden.

Der Bildsensor 32 nimmt Bildfolgen auf, wobei die Beleuchtungseinheit 34 für ausreichend Licht und insbesondere durch Specklemuster auch Struktur sorgt. Die Recheneinheit 36 bestimmt durch Vergleich der zu unterschiedlichen Zeiten aufgenommenen Bilder eine Relativbewegung der Winkelmesseinheit 30 gegenüber der erfassten Szenerie. Das in Chips für Computermäuse gängige Verfahren hierfür ist eine Auswertung des optischen Flusses und wird nicht näher erläutert, weil es für sich bekannt ist. Im Prinzip geht es dabei darum, die Bewegung von Bildmerkmalen in der Bildfolge auszuwerten, wobei diese Bildmerkmale beispielsweise Laserspeckles der Beleuchtungseinheit 34 sind. Obwohl die Verwendung eines kostengünstig verfügbaren und robusten, kommerziell erhältlichen Chips Vorteile hat, ist auch die Verwendung einzelner Komponenten, also in erster Linie eines Bildsensors 32 mit angeschlossener Recheneinheit 36 denkbar. Dabei kann Funktionalität der Recheneinheit 36 auch teilweise oder komplett in die Auswertungseinheit 40 verschoben sein.

Die Winkelmesseinheit 30 ist auf der rotierenden Ablenkeinheit 18 vorzugsweise auf der Rückseite des Drehspiegels angebracht und ihr Bildsensor 32 auf die Frontscheibe 46 gerichtet. Alternativ kann die Winkelmesseinheit 30 auch auf ein anderes ruhendes Teil des Laserscanners 10 ausgerichtet werden, beispielsweise das Gehäuse 44. Dadurch bewegt sich der Bildsensor 32 relativ zu dem erfassten ruhenden Teil des Laserscanners 10, und die Recheneinheit 36 ist in der Lage, diese Relativbewegung und damit die Rotationsgeschwindigkeit zu bestimmen. Eine typische Relativgeschwindigkeit liegt in der Größenordnung von 5-10 m/s. Dies muss noch mit der internen Geometrie des Laserscanners 10 verrechnet werden, etwa dem Abstand zwischen Winkelmesseinheit 30 und Frontscheibe 46, und dann daraus eine Winkelposition bestimmt werden. Diese Berechnungen können ebenfalls in der Recheneinheit 36 erfolgen. Gerade wenn die Winkelmesseinheit 30 ein nicht speziell für Laserscanner entworfener integrierter Chip ist, können solche Berechnungen auch in der Auswertungseinheit 40 implementiert sein.

Da sich die Winkelmesseinheit 30 gegenüber der Auswertungseinheit 40 bewegt, ist es erforderlich, Signale zwischen bewegten und ruhenden Komponenten zu übertragen und die Winkelmesseinheit mit Energie zu versorgen. In Figur 1 ist dies nur schematisch als Verbindungslinie dargestellt, tatsächlich wäre eine Realisierung über Schleifkontakte etwa durch die Drehachse des Motors 28 oder eine drahtlose Schnittstelle denkbar.

Die Ausrichtung der Winkelmesseinheit 30 auf die Frontscheibe 46 ermöglicht es, eine weitere Funktion zu erfüllen, nämlich deren Überwachung auf Verschmutzung. Dazu werden die Daten des Bildsensors 32 ein weiteres Mal etwa in Hinblick auf Amplitude und Kontrast ausgewertet. Zumindest einige kommerziell verfügbare integrierte Chips, die als Winkelmesseinheit 30 eingesetzt werden, liefern nicht nur die Geschwindigkeit, sondern auch solche Messwerte wie Kontrast- oder Signalstärke, teilweise auch Rohbilddaten. Schmutzpartikel auf der Frontscheibe 46 beeinflussen durch Streuung des von der Beleuchtungseinheit 34 ausgesandten Lichts das von dem Bildsensor 32 detektierte Specklemuster und verändern deshalb Kontrast und Signalstärke. Daher ist es möglich, einen Verschmutzungsgrad der Frontscheibe 46 zu detektieren. Dabei werden vorzugsweise vorab in einer Kalibration bei sauberer Frontscheibe 46 Referenzdaten gesammelt und gespeichert, um später die Verschmutzung durch Vergleich bewerten zu können.

Während herkömmlich eine Frontscheibenüberwachung nur wenige separate Messkanäle aufweist, kann über die mitdrehende Winkelmesseinheit 30 sogar hoch winkelaufgelöste Verschmutzungsinformation gewonnen werden, und zwar bei geeigneter Ausrichtung von genau dem maßgeblichen Teil der Frontscheibe 46, der auch für den Sendelichtstrahl 16 und das remittierte Licht 22 genutzt wird. In einer einfachen Verschmutzungsüberwachung wird nur binär entschieden, ob der Laserscanner 10 noch betriebsfähig ist. Die winkelaufgelöste Verschmutzungsinformation lässt aber auch differenziertere Betrachtungen zu. Beispielsweise wird geprüft, ob ein verschmutzter Bereich der Frontscheibe 46 einen Winkelbereich betrifft, in dem ein Schutzfeld liegt. Während eine Beeinträchtigung der Überwachung eines Schutzfeldes durch einen verschmutzten Bereich der Frontscheibe 46 sofort zu einer sicherheitsgerichteten Abschaltung führen muss, kann eine Verschmutzung in nicht relevanten Winkelbereichen hingenommen und damit die Verfügbarkeit des Laserscanners 10 erhöht werden.

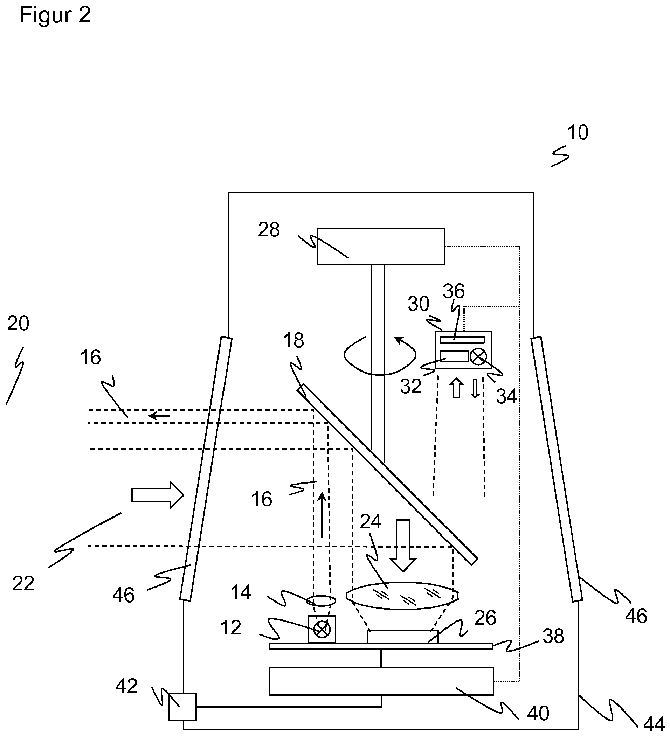

Figur 2 zeigt eine Schnittdarstellung einer weiteren Ausführungsform eines Laserscanners 10. Dabei bezeichnen überall gleiche Bezugszeichen die gleichen oder einander entsprechenden Merkmale und werden nicht erneut beschrieben. Anders als bei der Ausführungsform gemäß Figur 1 ist hier die Winkelmesseinheit 30 nicht mit der Ablenkeinheit 18 mitbewegt, sondern in dem Laserscanner 10 ruhend angeordnet und auf die sich somit in Relativbewegung befindliche Ablenkeinheit 18 gerichtet. Die Bestimmung der Drehgeschwindigkeit und damit der Winkelposition erfolgt dabei ganz analog. Die Anordnung hat den Vorteil, dass zwischen Winkelmesseinheit 30 und Auswertungseinheit 40 keine Datenverbindung zwischen beweglichen und ruhenden Teilen geschaffen werden muss. Wegen der Schrägstellung der Ablenkeinheit 18 zu der Winkelmesseinheit 30 ändert sich im Verlauf einer Umdrehung der Abstand. Das muss die Erfassung in der Winkelmesseinheit 30 je nach dort implementiertem Verfahren berücksichtigen. Durch zusätzliche Anordnung einer einfachen mitdrehenden horizontalen Scheibe oberhalb der Ablenkeinheit 18 kann dies aber auch vermieden werden.

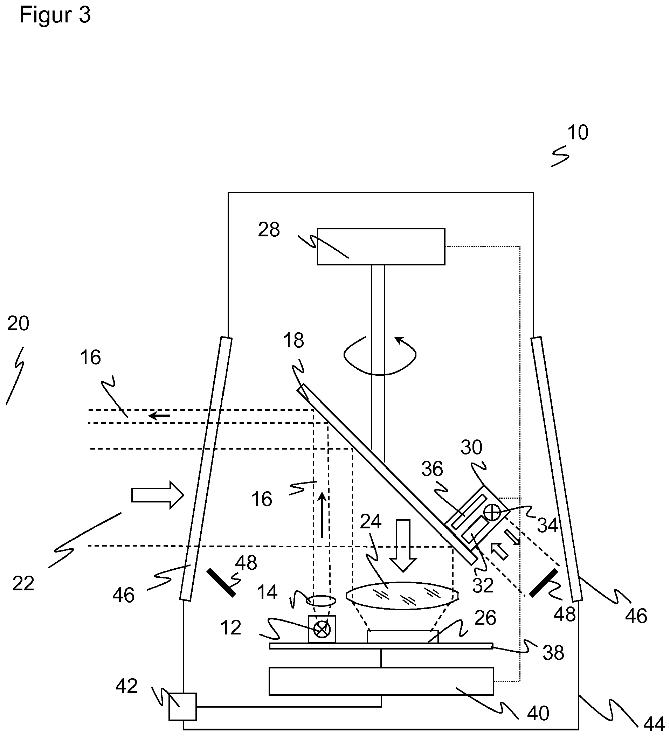

Figur 3 zeigt eine Schnittdarstellung einer weiteren Ausführungsform eines Laserscanners 10. Hier ist die Winkelmesseinheit 30 wieder mitdrehend auf der Ablenkeinheit 18 angeordnet, jedoch an einer anderen Position und verkippt, so dass anstelle der Frontscheibe 44 ein Bereich im ruhenden Sockel des Laserscanners 10 erfasst wird. Selbstverständlich kann alternativ nur die Position oder nur der Kippwinkel variiert werden.

Zudem ist im Erfassungsbereich des Bildsensors 32 eine Referenzmarkierung 48 vorgesehen, die in Bilddaten einfach und verlässlich erkennbar ist, weil sie beispielsweise besonders hell oder reflektierend ist oder einen bestimmten Code trägt. Entsprechendes ließe sich auch auf der Frontscheibe 46 anbringen, dann vorzugsweise etwas unterhalb oder oberhalb des Durchtrittsbereichs von Sendelichtstrahl 16 und remittiertem Licht 22. Die Referenzmarkierung 48 dient beispielsweise dazu, eine Nullposition festzulegen sowie jeweils nach einer Umdrehung einen etwaigen Schlupf in den von der Winkelmesseinheit 30 bestimmten Winkelpositionen auszugleichen. Es ist denkbar, Referenzmarkierungen 48 an mehreren Winkelpositionen anzubringen. In Figur 3 ist die Referenzmarkierung 48 sogar als umlaufender Ring ausgestaltet, welcher beliebig viele Codierungen aufweisen kann und zudem die Fremdlichtfestigkeit verbessert.

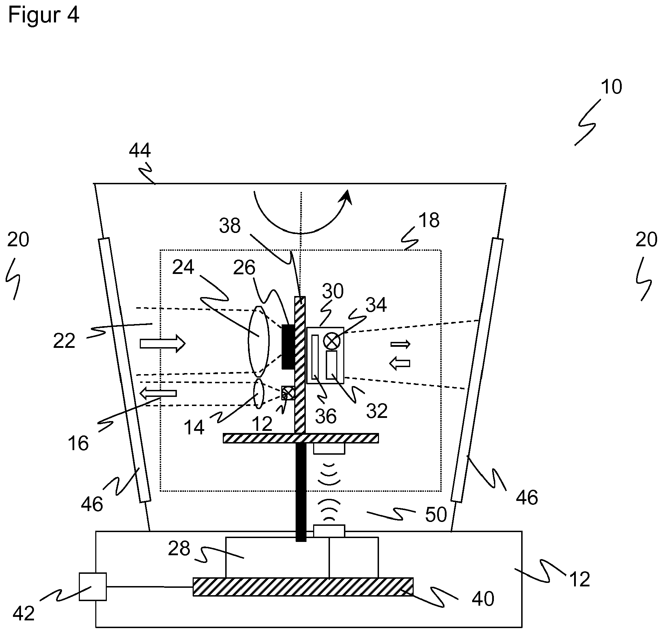

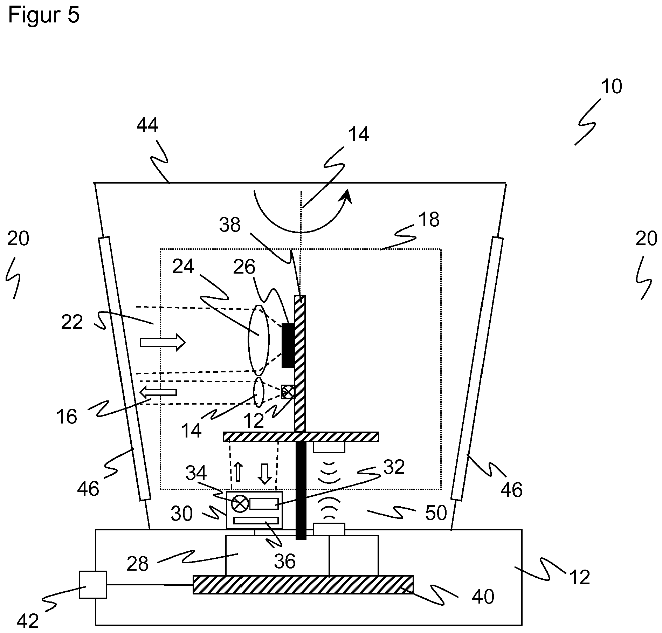

Die Figuren 4 und 5 zeigen Schnittdarstellungen von weiteren Ausführungsformen eines Laserscanners 10, in dem die Ablenkeinheit 18 kein Drehspiegel ist. Stattdessen ist ein rotierender Messkopf vorgesehen. Die Ablenkeinheit 18 ist also als Abtasteinheit vorgesehen, in der sich Lichtsender 12 und Lichtempfänger 26 samt Optiken 14, 24 mitdrehen. Die Auswertungsfunktionalität kann praktisch beliebig zwischen der rotierenden Abtasteinheit, beispielsweise der Leiterkarte 38, und der ruhenden Auswertungseinheit 40 verteilt werden. Für eine Datenübertragung zumindest in der Richtung hin zu der Auswertungseinheit 40, vorzugsweise auch bidirektional, ist eine drahtlose Kommunikationsschnittstelle 50 vorgesehen. Dabei kann es sich um jede bekannte Technologie wie eine optische, kapazitive, induktive oder Funkverbindung handeln. Auch eine drahtgebundene Alternative über Schleifkontakte ist denkbar. Entsprechendes gilt für eine Versorgung der mitbewegten Elemente in der Ablenkeinheit 18.

In der Ausführungsform gemäß Figur 4 rotiert die Winkelmesseinheit 30 mit der Ablenkeinheit 18 und ist auf die Frontscheibe 46 gerichtet. Dabei ist die Winkelmesseinheit 30 gegenüber Lichtsender 12 und Lichtempfänger 22 mit einem Winkelversatz vorzugsweise in der Nähe von 180° angeordnet, damit sich die beiden Systeme nicht stören. Die dargestellte räumliche Anordnung auf der Vorder- und Rückseite der Leiterkarte 38 ist nur ein Beispiel, denn etwa durch Verwendung entsprechender Gehäuseteile der Abtasteinheit sind praktisch beliebige Anordnungen denkbar. In der Ausführungsform gemäß Figur 5 ist die Winkelmesseinheit 30 im ruhenden Teil des Laserscanners 10 untergebracht und auf die rotierende Ablenkeinheit 18 gerichtet. Beide Ausführungsformen funktionieren ansonsten analog zu den unter Bezugnahme auf die Figuren 1 bis 3 beschriebenen Laserscannern 10 einschließlich der Möglichkeit, Referenzmarkierungen 48 zu verwenden.

Die Winkelmesseinheit 30 kann nicht nur die horizontale, sondern auch die vertikale Geschwindigkeit vermessen. Dadurch kann Zusatzinformation über die Winkelposition hinaus gewonnen werden. Eine Anwendungsmöglichkeit ist ein Laserscanner mit erweitertem Überwachungsbereich 20, bei dem die Ablenkeinheit 18 nicht nur um eine Achse rotiert, sondern zusätzlich verkippt wird. Außerdem kann die Zusatzinformation herangezogen werden, um Parameter wie die Laufruhe zu bestimmen, mechanische Schläge, Unwuchten und dergleichen zu erkennen und damit entsprechende Diagnosefunktionen auszuführen. Die Daten des Bildsensors 10 können für weitere Messungen genutzt werden, beispielsweise eine Fremdlichtmessung, eine Blendungsdetektion oder eine Erkennung von Manipulationen.

## Patentansprüche

1. Optoelektronischer Sensor (10), insbesondere Laserscanner, zur Erfassung von Objekten in einem Überwachungsbereich (20) mit einem Lichtsender (12) zum Aussenden eines Lichtstrahls (16), einer drehbaren Ablenkeinheit (18) zur periodischen Ablenkung des Lichtstrahls (16) in den Überwachungsbereich (20), einer Winkelmesseinheit (30) zur Bestimmung einer Winkelstellung der Ablenkeinheit (18), einem Lichtempfänger (26) zum Erzeugen eines Empfangssignals aus dem von den Objekten remittierten oder reflektierten Lichtstrahl (22) und einer Auswertungseinheit (40), die dafür ausgebildet ist, das Empfangssignal zur Erfassung der Objekte auszuwerten,
**dadurch gekennzeichnet,**
**dass** die Winkelmesseinheit (30) ein integriertes System aufweist, welches einen mit der Ablenkeinheit (18) mitbewegten Bildsensor (32), der auf ein ruhendes Teil (44, 46) des Sensors (10) ausgerichtet ist, oder einen ruhenden Bildsensor (32) umfasst, der auf die Ablenkeinheit (18) ausgerichtet ist, wobei das integrierte System weiterhin eine Recheneinheit (36) umfasst, die aus einem Signal des Bildsensors (32) die Relativbewegung der Ablenkeinheit (18) gegenüber dem Sensor (10) mit einem Verfahren des optischen Flusses bestimmt.

2. Sensor (10) nach Anspruch 1,
wobei das integrierte System eine Beleuchtungseinheit (34) aufweist.

3. Sensor (10) nach Anspruch 1 oder 2,
wobei an dem ruhenden Teil (44, 46) oder an der Ablenkeinheit (18) mindestens eine Referenzmarkierung (48) in einer bekannten Winkelposition angebracht ist.

4. Sensor (10) nach einem der vorhergehenden Ansprüche,
wobei die Ablenkeinheit (18) einen Drehspiegel aufweist und der Bildsensor (32) an der Rückseite des Drehspiegels angeordnet ist.

5. Sensor (10) nach einem der vorhergehenden Ansprüche,
wobei die Ablenkeinheit (18) als rotierende Abtasteinheit ausgebildet ist, welche den Lichtsender (12) und den Lichtempfänger (26) aufweist, und wobei der Bildsensor (32) auf der Abtasteinheit mit einem Winkelversatz zu Lichtsender (12) und Lichtempfänger (26) angeordnet ist.

6. Sensor (10) nach einem der vorhergehenden Ansprüche,
der eine Frontscheibe (46) aufweist und wobei der Bildsensor (32) auf die Frontscheibe (46) ausgerichtet ist, wobei die Recheneinheit (36) dafür ausgebildet ist, aus dem Signal des Bildsensors (32) eine Verschmutzung der Frontscheibe (46) zu erkennen.

7. Sensor (10) nach Anspruch 6,
wobei in der Recheneinheit (36) ein Referenzsignal für eine nicht verschmutzte Frontscheibe (46) abgelegt ist.

8. Sensor (10) nach einem der vorhergehenden Ansprüche,
der als Sicherheitssensor ausgebildet ist und einen Sicherheitsausgang (42) aufweist, wobei die Auswertungseinheit (40) dafür ausgebildet ist zu bestimmen, ob sich ein Objekt in einem Schutzfeld innerhalb des Überwachungsbereichs (20) befindet, und daraufhin ein sicherheitsgerichtetes Abschaltsignal über den Sicherheitsausgang (42) auszugeben.

9. Sensor (10) nach Anspruch 8,
wobei die Auswertungseinheit (40) dafür ausgebildet ist, ein sicherheitsgerichtetes Abschaltsignal auszugeben, wenn eine Verschmutzung der Frontscheibe (46) ein Schutzfeld betrifft.

10. Sensor (10) nach einem der vorhergehenden Ansprüche,
wobei die Recheneinheit (36) dafür ausgebildet ist, eine Relativbewegung der Ablenkeinheit (18) gegenüber dem ruhenden (44, 46) Teil auch in einer Richtung senkrecht zu der Drehbewegung der Ablenkeinheit (18) zu erfassen.

11. Verfahren zur Erfassung von Objekten in einem Überwachungsbereich (20), bei dem ein Lichtstrahl (16) ausgesandt, mit Hilfe einer Ablenkeinheit (18) periodisch in den Überwachungsbereich (20) abgelenkt, aus dem von den Objekten remittierten oder reflektierten Lichtstrahl (22) ein Empfangssignal erzeugt und das Empfangssignal zur Erfassung der Objekte ausgewertet wird, wobei die jeweilige Winkelposition bestimmt wird, unter welcher der Lichtstrahl (16) ausgesandt wird,
**dadurch gekennzeichnet,**
**dass** für die Messung der Winkelposition ein Bildsensor (32) mit der Ablenkeinheit (18) mitbewegt wird, der auf ein ruhendes Teil (44, 46) gerichtet ist, oder ein ruhender Bildsensor (32) auf die Ablenkeinheit (18) gerichtet wird, und aus einem Signal des Bildsensors (32) die Relativbewegung der Ablenkeinheit (18) gegenüber dem ruhenden Teil (44, 46) mit einem Verfahren des optischen Flusses bestimmt wird, wobei die Bestimmung der Relativbewegung in einem integrierten System für die Anwendung in Computermäusen erfolgt, das auch den Bildsensor (32) und eine Recheneinheit (36) umfasst.

12. Verfahren nach Anspruch 11,
wobei der Bildsensor (32) auf eine Frontscheibe (46) gerichtet ist und aus dem Signal des Bildsensors (32) zusätzlich eine Verschmutzung der Frontscheibe (46) erkannt wird, insbesondere durch Vergleich mit einem Referenzsignal bei nicht verschmutzter Frontscheibe (46).

## Claims

1. An optoelectronic sensor (10), in particular a laser scanner, for detecting objects in a monitoring area (20), the sensor (10) comprising a light transmitter (12) for transmitting a light beam (16), a rotatable deflection unit (18) for periodically deflecting the light beam (16) in the monitoring area (20), an angle measuring unit (30) for determining an angular position of the deflection unit (18), a light receiver (26) for generating a reception signal from a reflected light beam (22) being remitted or reflected by the objects, and an evaluation unit (40) configured to evaluate the reception signal for detecting the objects,
**characterized in that** the angle measuring unit (30) comprises an integrated system having an image sensor (32) moving with the deflection unit (18) and arranged in the direction of a stationary part (44, 46) of the sensor (10) or a stationary image sensor (32) arranged in the direction of the deflection unit (18), and wherein the integrated system further comprises a computing unit (36) which determines a relative movement of the deflection unit (18) with respect to the sensor (10) from a signal of the image sensor (32) with an optical flow method.

2. The sensor (10) according to claim 1,
wherein the integrated system comprises an illumination unit (34).

3. The sensor (10) according to claim 1 or 2,
wherein at least one reference marking (48) is arranged at the stationary part (44, 46) or at the deflection unit (18) in a known angular position.

4. The sensor (10) according to any of the preceding claims,
wherein the deflection unit (18) comprises a rotary mirror, and wherein the image sensor (32) is arranged at the rear side of the rotary mirror.

5. The sensor (10) according to any of the preceding claims,
wherein the deflection unit (18) is configured as a rotating scanning unit which comprises the light transmitter (12) and the light receiver (26), and wherein the image sensor (32) is arranged on the scanning unit at an angular offset with respect to the light transmitter (12) and the light receiver (26).

6. The sensor (10) according to any of the preceding claims,
the sensor (10) comprising a front screen (46), with the image sensor (32) being arranged in the direction of the front screen (46), wherein the computing unit (36) is configured to detect a contamination of the front screen (46) from the signal of the image sensor (32).

7. The sensor (10) according to claim 6,
wherein a reference signal for a front screen (46) without contamination is stored in the computing unit (36).

8. The sensor (10) according to any of the preceding claims,
the sensor (10) being configured as a safety sensor and comprising a safe output (42), wherein the evaluation unit (40) is configured to determine whether there is an object in a protected field within the monitoring area (20) and to then output a safety-related stop signal via the safe output (42).

9. The sensor (10) according to claim 8,
wherein the evaluation unit (40) is configured to output a safety-related stop signal when there is a contamination of the front screen (46) in connection with a protected field.

10. The sensor (10) according to any of the preceding claims,
wherein the computing unit (36) is configured to also detect a relative movement of the deflection unit (18) with respect to the stationary part (44, 46) in a direction transverse to the rotary movement of the deflection unit (18).

11. A method for detecting objects in a monitoring area (20), wherein a light beam (16) is transmitted, the light beam (16) is periodically deflected in the monitoring area (20) by means of a deflection unit (18), a reception signal is generated from a reflected light beam (22) remitted or reflected by the objects, and the reception signal is evaluated for detecting the objects, wherein a respective angular position is determined where the light beam (16) is transmitted, **characterized in that** for measuring the angular position an image sensor (32) which is arranged in the direction of a stationary part (44, 46) is moved with the deflection unit (18) or a stationary image sensor (32) is arranged in the direction of the deflection unit (18), and a relative movement of the deflection unit (18) with respect to the stationary part (44, 46) is determined from a signal of the image sensor (32) with an optical flow method, wherein determining of the relative movement is carried out in an integrated system for use in a computer mouse, the integrated system also comprising the image sensor (32) and a computing unit (36).

12. The method according to claim 11,
wherein the image sensor (32) is arranged in the direction of a front screen (46), and wherein additionally a contamination of the front screen (46) is detected from the signal of the image sensor (32), in particular by comparison with a reference signal for a front screen (46) without contamination.

## Revendications

1. Capteur optoélectronique (10), en particulier scanneur laser, pour détecter des objets dans une zone à surveiller (20), comportant un émetteur de lumière (12) pour émettre un rayon lumineux (16), une unité de déviation rotative (18) pour la déviation périodique du rayon lumineux (16) jusque dans la zone à surveiller (20), une unité de mesure d'angle (30) pour déterminer une position angulaire de l'unité de déviation (18), un récepteur de lumière (26) pour générer un signal de réception à partir du rayon lumineux (22) réémis ou réfléchi par les objets, et une unité d'évaluation (40) qui est réalisée pour évaluer le signal de réception afin de détecter les objets,
**caractérisé en ce que**
l'unité de mesure d'angle (30) comprend un système intégré qui comporte un capteur d'images (32) déplacé avec l'unité de déviation (18) et orienté sur une partie en repos (44, 46) du capteur (10), ou bien qui comporte un capteur d'images (32) en repos qui est orienté sur l'unité de déviation (18), le système intégré comportant en outre une unité de calcul (36) qui détermine, à partir d'un signal du capteur d'images (32), le mouvement relatif de l'unité de déviation (18) par rapport au capteur (10) par une méthode de flux optique.

2. Capteur (10) selon la revendication 1,
dans lequel le système intégré comprend une unité d'éclairage (34).

3. Capteur (10) selon la revendication 1 ou 2,
dans lequel au moins un marquage de référence (48) dans une position angulaire connue est déposé sur la partie en repos (44, 46) ou sur l'unité de déviation (18).

4. Capteur (10) selon l'une des revendications précédentes,
dans lequel l'unité de déviation (18) comprend un miroir rotatif et le capteur d'images (32) est agencé sur la face arrière du miroir rotatif.

5. Capteur (10) selon l'une des revendications précédentes,
dans lequel l'unité de déviation (18) est réalisée sous forme d'unité de balayage rotative qui comprend l'émetteur de lumière (12) et le récepteur de lumière (26), et le capteur d'images (32) est agencé sur l'unité de balayage en décalage angulaire par rapport à l'émetteur de lumière (12) et au récepteur de lumière (26).

6. Capteur (10) selon l'une des revendications précédentes,
comportant une vitre frontale (46), le capteur d'images (32) étant orienté sur la vitre frontale (46), dans lequel l'unité de calcul (36) est réalisée pour reconnaître un encrassement de la vitre frontale (46) à partir du signal du capteur d'images (32).

7. Capteur (10) selon la revendication 6,
dans lequel un signal de référence pour une vitre frontale (46) non encrassée est stocké dans l'unité de calcul (36).

8. Capteur (10) selon l'une des revendications précédentes,
qui est réalisé sous forme de capteur de sécurité et qui comprend une sortie de sécurité (42), l'unité d'évaluation (40) étant réalisée pour déterminer si un objet se trouve dans un champ de protection à l'intérieur de la zone à surveiller (20) et pour émettre alors un signal de coupure relatif à la sécurité via la sortie de sécurité (42).

9. Capteur (10) selon la revendication 8,
dans lequel l'unité d'évaluation (40) est réalisée pour émettre un signal de coupure relatif à la sécurité lorsqu'un encrassement de la vitre frontale (46) affecte un champ de protection.

10. Capteur (10) selon l'une des revendications précédentes,
dans lequel l'unité de calcul (36) est réalisée pour détecter un mouvement relatif de l'unité de déviation (18) par rapport à la partie en repos (44, 46) également dans une direction perpendiculaire à la direction de rotation de l'unité de déviation (18).

11. Procédé pour détecter des objets dans une zone à surveiller (20), dans lequel un rayon lumineux (16) est émis, dévié périodiquement jusque dans la zone à surveiller (20) à l'aide d'une unité de déviation (18), un signal de réception est généré à partir du rayon lumineux (22) réémis ou réfléchi par les objets, et le signal de réception est évalué pour détecter les objets,
et la position angulaire respective à laquelle le rayon lumineux (16) est émis est déterminée,
**caractérisé en ce que**
pour mesurer la position angulaire, un capteur d'images (32) est déplacé avec l'unité de déviation (18), qui est orienté sur une partie en repos (44, 46), ou bien un capteur d'images en repos (32) est orienté sur l'unité de déviation (18), et à partir d'un signal du capteur d'images (32) le mouvement relatif de l'unité de déviation (18) par rapport à la partie en repos (44, 46) est déterminé par une méthode de flux optique, la détermination du mouvement relatif étant effectuée dans un système intégré destiné à l'application dans des souris d'ordinateur, qui comprend également le capteur d'images (32) et une unité de calcul (36).

12. Procédé selon la revendication 11,
dans lequel le capteur d'images (32) est orienté sur une vitre frontale (46), et en supplément, à partir du signal du capteur d'images (32), un encrassement de la vitre frontale (46) est reconnu, en particulier par comparaison avec un signal de référence de non-encrassement de la vitre frontale (46).
